Europäisches Patentamt

European Patent Office

Office européen des brevets

(11) Veröffentlichungsnummer: **0 448 786 B1**

# EUROPÄISCHE PATENTSCHRIFT

(45) Veröffentlichungstag der Patentschrift: **01.03.95**

(51) Int. Cl.6: **C08F 8/14**, C10L 1/18

(21) Anmeldenummer: **90122389.1**

(22) Anmeldetag: **23.11.90**

(54) **Öllösliche polymere Umesterungsprodukte.**

(30) Priorität: **30.03.90 DE 4010161**

(43) Veröffentlichungstag der Anmeldung:
**02.10.91 Patentblatt 91/40**

(45) Bekanntmachung des Hinweises auf die
Patenterteilung:
**01.03.95 Patentblatt 95/09**

(84) Benannte Vertragsstaaten:
**AT BE CH DE DK ES FR GB IT LI NL SE**

(56) Entgegenhaltungen:
**US-A- 2 558 548**
**US-A- 2 574 984**
**US-A- 3 309 181**

(73) Patentinhaber: **RÖHM GMBH**
**Kirschenallee**
**D-64293 Darmstadt (DE)**

(72) Erfinder: **Böhmke, Uwe**
**Schulzweg 7**
**W-6100 Darmstadt (DE)**
Erfinder: **Hitzler, Otto**
**Wilhelm-Leuschner-Strasse 57**
**W-6100 Erzhausen (DE)**
Erfinder: **Pennewiss, Horst, Dr.**
**De-La-Fosse-Weg 21**
**W-6100 Darmstadt (DE)**
Erfinder: **Reiner, Roland, Dr.**
**Am Oberfeld 19**
**W-6100 Darmstadt (DE)**

## Beschreibung

Die Erfindung betrifft öllösliche polymere Umesterungsprodukte, die durch teilweise oder vollständige Umesterungen von Ethylen-Vinylacetat-Copolymeren mit höheren Fettsäuren hergestellt werden. Die polymeren Umesterungsprodukte dienen als Öladditive, sie können z.B. als Verdicker und VI-Verbesserer für Hydraulik-, Getriebe- und Schmieröle auf Basis von Mineralölen, Syntheseölen, Esterölen und Fettölen (Triglyceriden) eingesetzt werden.

Stand der Technik

Copolymerisate aus Ethylen und Vinylacetat sind als wirksame Fließverbesserer in Rohölen und Treibstoffen bekannt (vgl. z.B. US-A 3 048 479). Derartige Copolymerisate sind jedoch nur begrenzt öllöslich.

Bestimmte Copolymerisate des Ethylens mit Vinylestern höherer Fettsäuren sind ebenfalls beschrieben. Auch die Herstellungsweise durch polymeranaloge Umesterung von Ethylen-Vinylacetat-Copolymeren gehört im Prinzip dem Stand der Technik an. (Vgl. US-A 3 236 612; DE-C 1 162 630; US-A 3 236 612, EP-A 0 045 342). Ausweislich der genannten Unterlagen besitzen diese Polymeren Molekulargewichte $\overline{M}w$ im Bereich 1 000 - 5 000. Sie wurden als Stockpunkt- und Fließverbesserer für Mitteldestillate (Dieselkraftstoffe und Heizöle)in Zusatzmengen von 0,01 bis 0,05 Gew.-% vorgeschlagen.

Aufgabe und Lösung

Es bestand die Aufgabe, Additive für funktionelle Öle zur Verfügung zu stellen, die als Verdickungsmittel wirken und gleichzeitig den Viskositätsindex der Öle verbessern. Anzustreben war insbesondere ein günstiges Verhältnis von Verdickungswirkung zu Scherstabilität. Die Additive sollten sowohl in Mineralöl als auch in Syntheseölen, Esterölen und Fettölen gut löslich sein. (Vgl. Ullmanns Encyclopädie der Techn. Chemie, 4. Auflage, Band 20, S. 509 - 528, Verlag Chemie 1981).
Es wurde nun gefunden, daß sich Additive, die in hohem Grade die zu fordernden Eigenschaften besitzen, nach dem Verfahren der vorliegenden Erfindung gewinnen lassen.

Die Erfindung betrifft somit ein Verfahren zur Herstellung von öllöslichen Polymeren aus Ethylen-Vinylacetat-Copolymeren durch Umesterung mit höheren Fettsäuren bzw. mit Estern derselben, wobei man ein Ethylen-Vinylacetat-Copolymeres mit einem Vinylacetatgehalt von 10 - 90, vorzugsweise 30 - 60 Gew.-% und einem Molekulargewicht $\overline{M}w$ von 20 000 - 200 000, vorzugsweise 80 000 - 200 000 insbesondere 50 000 - 100 000 mit $C_8$-$C_{22}$ Fettsäuren, vorzugsweise einem Gemisch derselben, insbesondere mit Gemischen aus Iso-Octansäure, Iso-Nonansäure oder Isodecansäure mit n-Alkansäuren mit 10 - 22 C-Atomen im Molekül oder Estern der genannten Säuren, mit der Maßgabe, daß der Anteil an $C_{16}$-$C_{22}$-Fettsäuren oder deren Ester 0 - 60 Mol-%, vorzugsweise 10 - 50 Mol.-%, insbesondere 20 - 40 Mol.-% bezogen auf die Gesamtheit der eingesetzten Fettsäuren bzw. Fettsäureester sein soll, umestert.

In der Regel erfolgt die Umesterung (Transacylierung) in einer katalysierten Reaktion, wobei basische oder saure Katalyse im Vordergrund stehen. (Vgl. Houben-Weyl, Methoden der organischen Chemie, 4. Auflage, Bd. XIV/2 S. 737 - 738, Georg Thieme Verlag 1963).
Im allgemeinen stehen die Reaktionspartner : Monomere Säure bzw. Ester zu - umgerechnet - Vinylester-Monomer im Ethylen-Vinylacetat-Copolymeren im Verhältnis 1 : 1 mol bis 5 : 1 mol.
Bei den Estern handelt es sich in der Regel um die Ester niedermolekularer Alkohole (C1 - C4), deren Essigsäureester sich gegebenenfalls problemlos aus dem Reaktionsgemisch entfernen lassen, z.B. durch (kontinuierliche) Destillation. Genannt seien insbesondere die Methyl- und die Ethylester der Fettsäuren.
Besonders erwähnt seien n-$C_{10}$-$C_{20}$-Fettsäureester vorzugsweise n-$C_{12}$-$C_{18}$-Fettsäuremethylester. Als Beispiel seien Ester der Kokosfettsäuren, Rübölfettsäuren und Talgfettsäuren genannt. Auch können die entsprechenden Triglyceride wie Kokosfett, Talgfett und Rüböl direkt verwendet werden. (Vgl. Fettalkohole, 2. Auflage, S. 13, Heraus. Henkel KGaA, Düsseldorf, Schneider und Hense GmbH, Düsseldorf 1982). Die Bestimmung der Molekulargewichte Mw kann z.B. über dem Schmelzviskositätsindex nach G. W.Gilby, Development in Rubber Technology, V.A. Whelan and K. S. Lee, Chapter 4. Ethylene-Vinylacetate Copolymer oder durch "Size exclusion chromatography" oder Lichtstreuung durchgeführt werden (vgl. H.F. Mark et al. Encyclopedia of Polymer Science and Technology 2nd Ed. Vol. 10, 1 - 19, J. Wiley 1987).

Als besonders geeignet kann die Katalyse durch Basen, speziell durch Alkalialkoxide oder Magnesiumalkoxide insbesondere durch die Natrium-, Kalium- oder Lithiumalkoxide gelten (vgl. auch US-A 2 558 548). Erwähnt seien die Methoxide, Ethoxide, Propoxide und Butoxide beispielsweise Natriummethoxide, Natrium tert.-butoxid u.ä.. Auch alkalische Ionenaustauscher kommen in Frage.

Als Anhalt für die praktische Durchführung sei eine Menge von ca. 2 ± 0,5 Gew.-% basischer Katalysator, speziell Alkalialkoxid bezogen auf das eingesetzte Vinylacetat genannt.

Alternativ können auch andere an sich bekannte Umesterungs-/Transacylierungskatalysatoren angewendet werden, insbesondere relativ starke organische Säuren, wie Toluolsulfonsäure, oder saure Ionenaustauscher bzw. Molekularsiebe.

Als Anhalt sei z.B. eine Katalysator-Menge von 0,5 Gew.-% (bezogen auf das eingesetzte Vinylacetat) an den starken Säuren genannt.

Eine weitere Möglichkeit der katalytischen Beeinflussung stellt die Verwendung von Titan-IV-alkoxiden, und/oder von Zinn-Alkoxiden gegebenenfalls in organischen Komplexen z.B. mit Triphenylphosphin dar, wobei die Alkoxide von $C_1$-$C_4$-Alkoholen bevorzugt sind.

Für Umesterungen des genannten Typs sind inerte Lösungsmittel wie Ether, beispielsweise Ethylenglykoldialkylether oder Tetrahydrofuran, Dioxan (Vgl. US-A 2 019 832) sowie Kohlenwasserstoffe wie Tetrahydro-Naphthalin, empfohlen worden. Desweiteren kommen Ketone wie Methylethylketon in Frage.

Die erfindungsgemäße Umesterungsreaktion wird jedoch vorteilhaft in Mineralöl durchgeführt, insbesondere Mineralölen der für die Additivierung vorgesehenen Typen. Bei den vorzugsweise zur Anwendung kommenden Mineralölen handelt es sich beispielsweise um paraffinbasische Grundöle der Viskositätsklassen 100 N bzw. 150 N. (Vgl. Ullmann's Encyclopädie der Techn. Chemie, 4. Auflage, Bd. 20, S. 591 - 606, Verlag Chemie). Bevorzugt sind z.B. Mineralöle mit einer Viskosität von ca. 4 - 5 $mm^2$/s bei 100 Grad C.

(Bestimmung der Viskosität nach ASTM D 445) Im Einklang mit den üblicherweise angewendeten Reaktionsbedingungen findet die erfindungsgemäße Umesterungsreaktion bei Normaldruck und bei erhöhter Temperatur, im allgemeinen im Bereich 100 - 180 Grad C, vorzugsweise bei 130 $\pm$ 20 Grad C statt. Zweckmäßigerweise empfiehlt es sich, die Reaktion unter einem inerten Schutzgas wie beispielsweise Stickstoff vorzunehmen.

Die Reaktionsdauer liegt im allgemeinen im Bereich von einigen Stunden bis zu einem Tag. Im Falle von Basenkatalyse ist z.B. eine Reaktionszeit von 7 Stunden angemessen, während bei der sauren Katalyse mit beispielsweise p-Toluolsulfonsäure Reaktionszeiten von ca. 24 Stunden eingehalten werden.

Der Polymergehalt der Mineralöle, die als Endprodukte unmittelbar Verwendung finden können, kann durch Dialyse bestimmt werden.

Er liegt im allgemeinen im Bereich 20 bis 50 Gew.-%. Neben den erfindungsgemäßen Additiven können die Mineralöle zur Anwendung noch weitere, an sich bekannte Zusatzstoffe wie DI-Paket und OCP-VI-Verbesserer enthalten. Die Anwendungskonzentrationen der erfindungsgemäßen Additive liegen bei 0,01 bis 5 Gew.-% Polymer, wobei bei vorwiegend auf Verbesserung des Pour Point gerichteter Additivierung die Zusatzmengen gewöhnlich bei 0,05 - 0,5 Gew.-%, bei vorwiegend VI-verbessernder Wirkung dagegen üblicherweise bei 1 - 4 Gew.-% (bezogen auf die Mineralöle) liegen.

Vorteilhafte Wirkungen

Die öllöslichen Umesterungsprodukte gemäß der vorliegenden Erfindung sind wertvolle Öladditive, die insbesondere als VI-Verbesserer in z.B. Mineralölen eine ausgezeichnete Relation Verdikkungswirkung zu Scherstabilität zeigen. Damit können Mehrbereichsschmieröle für Motoren, Getriebe und Hydrauliken hergestellt werden.

Die folgenden Beispiele dienen zur Erläuterung der Erfindung. Die CCS-Viskosität wird nach ASTM D-2602 bzw. DIN 51 377 bestimmt, die Brookfield-Viskosität nach DIN 51 398.

Der Scherverlust wird nach DIN 51 382 bestimmt. Der Scherstabilitätsindex (SSI) ist als Verlust an Verdickungswirkung in %, bei Scherstabilitätsmessung nach ASTM D-2603 definiert.

Die Uneinheitlichkeit U ist definiert als $\frac{Mw}{Mn}$ -1, wobei Mw das Gewichtsmittel und Mn das Zahlenmittel des Molekulargewichts ist, welche im allgemeinen mit Hilfe der Gelpermeationschromatographie (GPC) bestimmt werden.

BEISPIELE

Beispiel 1

466,6 g Ethylen-Vinylacetatcopolymerisat mit 40 Gew.-% Vinylacetat entspr. 2,17 mol; Mw 66 000, U = 1,76, werden mit 533,3 g (2,17 mol) eines Gemisches aus n-C12-C18-Fettsäuremethylester mit einer mittleren C-Zahl der Säurereste von 14 in einem Glaskolben mit Rührer, Thermometer und Destillationsvorrichtung in 1 000 g Mineralöl (Viskosität 5,4 $mm^2$/s bei 100 Grad C) bei 130 Grad C unter $N_2$ gelöst. Nach Zugabe von 10 g $NaOCH_3$ wird 7 Stunden bei dieser Temperatur gerührt und das entstehende Methylacetat abgezogen. Der Polymergehalt des Endpodukts, bestimmt durch Dialyse, beträgt 766,6 g (entsprechend einer Zusammensetzung 41 Gew.-% Polymer, 53,4 Gew.-% Öl und 5,6 Gew.-% Ester) und entsprechend einem Umsatz von 80 % der Theorie. 2,5 Gew.-% des Polymerisats in eimen 150 N-Grundöl (Viskosität: 5,4 $mm^2$/s bei 100 Grad C) ergeben eine Viskosität bei 40 Grad C von 91,5 $mm^2$/s, bei 100 Grad C von 14,64 $mm^2$/s, Viskositätsindex = 167; Scherverlust nach DIN 51 382 : 14,9 % (PSSI = 23). Die CCS-Viskosität der Lösung bei -20 Grad C beträgt 3 000 mPa.s.

Beispiel 2

485 g Ethylen-Vinylacetat-Copolymerisat mit 40 Gew.-% Vinylacetat (= 2,26 mol Vinylacetat) Mw = 66 000; U = 1,76 werden mit 515 g Kokosfettsäuremethylester (2,3 mol) in 1 000 g Mineralöl (Viskosität 5,4 mm²/s bei 100 Grad C) unter $N_2$ bei 130 Grad C gelöst und nach Zugabe von 10 g $NaOCH_3$ unter Rühren 7 Stunden bei dieser Temperatur umgeestert. Der Polymergehalt des Endprodukts beträgt 772 g, entspr. einem Umsatz von 82 % d.Th. und einer Zusammensetzung von 41,4 Gew.-% Polymer, 53,7 Gew.-% Öl und 4,9 Gew.-% Ester. 2,5 Gew.-% des Polymerisats in einem 150 N-Grundöl (Viskosität: 5,4 mm²/s bei 100 Grad C) geben eine Viskosität von 13,81 mm²/s bei 100 Grad C, 85,1 mm²/s bei 40 Grad C und einen VI von 167, der Scherverlust nach DIN 51 382 beträgt 14,2 % (PSSI = 23).

Beispiel 3

515 g Ethylen-Vinylacetat-Copolymerisat (Mw = 69 000, U = 1,32) mit 33 Gew.-% Vinylacetat ( = 1,98 mol) werden mit 485 g (= 2,0 mol) eines Gemisches aus n-$C_{12}$-$C_{18}$-Fettsäuremethylestern mit einer mittleren C-Zahl der Säurereste von 14 in 1 000 g Mineralöl (Viskosität bei 100 Grad C = 5,4 mm²/s) unter $N_2$ und Rühren bei 130 Grad C gelöst und nach Zusatz von 10 g $NaOCH_3$ 7 Stunden umgeestert. Der Polymergehalt beträgt 778 g, entsprechend einem Vinylacetatumsatz von 77 % der Theorie und einer Zusammensetzung von 41,2 Gew.-% Polymer, 53,0 Gew.-% Öl und 5,8 Gew.-% Ester. 2,5 Gew.-% in Mineralöl (5,4 mm²/s bei 100 Grad C) geben eine Viskosität von 14,5 mm²/s bei 100 Grad C, 85,0 mm²/s bei 40 Grad C und einen VI von 178. Der Scherverlust nach DIN 51 382 beträgt 22,7 % (PSSI = 36,2).

Beispiel 4

480 g Ethylen-Vinylacetat-Copolymerisat (Mw = 66 000; U = 1,76) mit 40 Gew.-% Vinylacetat (= 2,23 mol) werden mit 520 g (2,2 mol) n-$C_{12}$-$C_{18}$-Fettsäuregemisch ($\overline{C}$ = 14) in 1 000 g Mineralöl (5,4 mm²/s bei 100 Grad C) unter Zusatz von 5 g (0,5 Gew.-%) p-Toluolsulfonsäure bei 130 Grad C unter $N_2$ gelöst und unter Rühren 24 Stunden umgeestert. Der Polymerrückstand beträgt 753 g, d.s. 71 %, Umsatz entsprechend einer Zusammensetzung von 40,0 Gew.-% Polymer, 53,1 Gew.-% Öl und 6,9 Gew.-% Ester. 2,5 Gew.-% des Polymeren in Mineralöl (5,4 mm²/s bei 100 Grad C) geben eine Viskosität von 14,25 mm²/s bei 100 Grad C, 93,0 mm²/s bei 40 Grad C und einen VI von 158. Der Scherverlust nach DIN 51 382 beträgt 15,8 %; die CCS-Viskosität bei -20 Grad C 3 000 mPa.s.

Vergleichsmessungen mit einem handelsüblichen Polymethacrylat-VI-Verbesserer auf Basis n-$C_{12}$-$C_{18}$-Alkylmethacrylat (mittlere C-Zahl = 14,1) mit 10 Gew.-% Methylmethacrylat: 5,7 Gew.% Polymethacrylat in Mineralöl (5,4 mm²/s bei 100 Grad C) geben eine Viskosität von 14,27 mm²/s bei 100 Grad C, 81,3 mm²/s bei 40 Grad C und eine VI von 183. Der Scherverlust nach DIN 51 382 beträgt 15,5 % (PSSI = 25). Die CCS-Viskosiät bei -20 Grad C ist 3 500 mPa.s.

**Patentansprüche**

1. Verfahren zur Herstellung von öllöslichen Polymeren aus Ethylen-Vinylacetat-Copolymeren durch Umesterung mit höheren Fettsäuren oder mit Estern derselben,
   dadurch gekennzeichnet,
   daß man ein Ethylen-Vinylacetat-Copolymeres mit einem Vinylacetatgehalt von 10 - 90 Gew.-% und einem Molekulargewicht $\overline{M}$w von 20 000 - 200 000 mit $C_8$-$C_{22}$-Fettsäuren oder Estern der genannten Säuren, mit der Maßgabe, daß der Anteil an $C_{16}$-$C_{22}$-Fettsäuren oder deren Ester nicht höher als 60 Mol.-% bezogen auf die Gesamtheit der eingesetzten Fettsäuren bzw. Fettsäureester sein soll, umestert.

2. Verfahren gemäß Anspruch 1, dadurch gekennzeichnet, daß man mit einem Gemisch von $C_8$-$C_{22}$-Fettsäuren oder Estern derselben umestert.

3. Verfahren gemäß den Ansprüchen 1 und 2, dadurch gekennzeichnet, daß man mit Fettsäureestern von $C_1$-$C_4$-Alkoholen, insbesondere mit Fettsäureestern des Glycerins umestert.

4. Verfahren gemäß den Ansprüchen 1 und 2, dadurch gekennzeichnet, daß man die Umesterung in Anwesenheit eines basischen Katalysators durchführt.

5. Verfahren gemäß Anspruch 4, dadurch gekennzeichnet, daß man die Umesterung in Anwesenheit von Alkali-Alkoxiden durchführt.

6. Verfahren gemäß den Ansprüchen 1 und 2, dadurch gekennzeichnet, daß man die Umesterung in Anwesenheit eines sauren Katalysators durchführt.

7. Verfahren gemäß den Ansprüchen 1 - 6, dadurch gekennzeichnet, daß die Umesterung in Mineralöl durchgeführt wird.

8. Verfahren gemäß den Ansprüchen 1 - 7, dadurch gekennzeichnet, daß die Umesterung im Temperaturbereich 100 - 180 Grad C durchgeführt wird.

9. Verwendung der nach dem Verfahren gemäß den Ansprüchen 1- 8 erhaltenen Umesterungsprodukte als Öladditive.

## Claims

1. A process for preparing oil-soluble polymers from ethylene/vinylacetate copolymers by transesterification with higher fatty acids or esters thereof, characterised in that an ethylene/vinylacetate copolymer having a vinyl acetate content of 10 to 90 wt.% and a molecular weight $\overline{M}w$ of 20,000 to 200,000 is transesterified with $C_8$-$C_{22}$-fatty acids or esters of said acids, with the proviso that the amount of $C_{16}$-$C_{22}$-fatty acids or esters thereof should not be greater than 60 mol.% based on the total of the fatty acids or fatty acid esters used.

2. A process according to claim 1, characterised in that the transesterification is carried out with a mixture of $C_8$-$C_{22}$-fatty acids or esters thereof.

3. A process according to claims 1 and 2, characterised in that the transesterification is carried out with fatty acid esters of $C_1$-$C_4$-alcohols, especially with fatty acid esters of glycerol.

4. A process according to claims 1 and 2, characterised in that the transesterification is carried out in the presence of a basic catalyst.

5. A process according to claim 4, characterised in that the transesterification is carried out in the presence of alkali metal alkoxides.

6. A process according to claims 1 and 2, characterised in that the transesterification is carried out in the presence of an acid catalyst.

7. A process according to claims 1 to 6, characterised in that the transesterification is carried out in mineral oil.

8. A process according to claims 1 to 7, characterised in that the transesterification is carried out within the temperature range of 100 to 180 °C.

9. Use as oil additives of the transesterification products obtained by the method as described in claims 1 to 8.

## Revendications

1. Procédé de préparation de polymères oléosolubles à partir de copolymères éthylène/acétate de vinyle par transestérification avec des acides gras supérieurs ou avec des esters de ceux-ci, caractérisé en ce qu'an transestérifie un copolymère éthylène/acétate de vinyle ayant une teneur en acétate de vinyle de 10 à 90% en poids et un poids moléculaire $\overline{M}w$ de 20 000 à 200 000 avec des acides gras en $C_8$-$C_{22}$ au des esters de ces acides, étant spécifié que la propartion d'acides gras en $C_{16}$-$C_{22}$ ou d'esters de ceux-ci ne doit pas être supérieure a 60% en moles, par rapport à la totalité des acides gras ou esters d'acides gras mis en réaction.

2. Procédé selon la revendication 1, caractérise en ce qu'on transestérifie avec un mélange d'acides gras en $C_8$-$C_{22}$ au d'esters de ceux-ci.

3. Procédé selon la revendication 1 ou 2, caractérisé en ce qu'on transestérifie avec des esters d'acides gras et d'alcools en $C_1$-$C_4$, en particulier avec des esters d'acides gras et du glycérol.

4. Procédé selon la revendication 1 ou 2, caractérisé en ce qu'on conduit la transestérification en présence d'un catalyseur basique.

5. Procédé selon la revendication 4, caractérisé en ce qu'on conduit la transestérification en présence d'alcoolates de métaux alcalins.

6. Procédé selon la revendication 1 ou 2, caractérisé en ce qu'on conduit la transestérification en présence d'un catalyseur acide.

7. Procédé selon l'une quelconque des revendications 1 à 6, caractérisé en ce qu'on conduit la transestérification dans une huile minérale.

8. Procédé selon l'une quelconque des revendications 1 à 7, caractérisé en ce qu'on conduit la transestérification dans la gamme de température de 100 à 180 °C.

9. Utilisation des produits de transestérification obtenus par le procédé selon l'une quelconque des revendications 1 à 8 comme additifs pour des huiles.